# EUROPÄISCHE PATENTANMELDUNG

(11) **EP 4 776 380 A1**
(43) Veröffentlichungstag der Anmeldung: **15.07.2026**
(21) Anmeldenummer: 25224303.5
(22) Anmeldetag: 17.12.2025
(51) Int. Cl.: H01M 10/44, H01M 10/48, H01M 10/625, H01M 10/633

(54) **VERFAHREN ZUM BETRIEB EINES BATTERIESYSTEMS UND BATTERIESYSTEM**

(30) Priorität: 09.01.2025 DE 102025100626
(71) Anmelder: Volkswagen Aktiengesellschaft, 38440 Wolfsburg (DE)
(72) Erfinder: Schriever, Udo, 38440 Wolfsburg (DE); Bedürftig, Benjamin, 38440 Wolfsburg (DE); Gaush, Anish, 38440 Wolfsburg (DE); Marghli, Mohamed, 38440 Wolfsburg (DE); Berschick, Sebastian, 38440 Wolfsburg (DE)

(57) **Zusammenfassung**

Die Erfindung betrifft ein Verfahren zum Betrieb eines Batteriesystems und ein Batteriesystem, wobei das Batteriesystem einen Batteriezellenstapel mit einer Mehrzahl von Batteriezellen, eine Einrichtung zur Temperierung der Batteriezellen und mindestens einen Temperatursensor umfasst, wobei die Einrichtung zur Temperierung an einer ersten Stirnseite des Batteriezellenstapels und der mindestens eine Temperatursensor in einem der ersten Stirnseite abgewandten Bereich des Batteriezellenstapels angeordnet ist, wobei das Verfahren die folgenden Schritte umfasst:
a) Prüfen, ob ein vom Temperatursensor erzeugtes Temperatursignal eine Temperatur repräsentiert, die kleiner als ein vorbestimmter Temperatur-Schwellwert ist,
b) Durchführen einer temperatursignalunabhängigen Ladeleistungsregelung, wenn die repräsentierte Temperatur kleiner als der Temperatur-Schwellwert ist.

## Beschreibung

Die Erfindung betrifft ein Verfahren zum Betrieb eines Batteriesystems und ein Batteriesystem.

Batteriesysteme werden in Fahrzeugen, insbesondere Elektro- und Hybridfahrzeugen, verwendet, um für den Antrieb des Fahrzeugs benötigte Energie in elektrischer Form zu speichern. Beispielsweise kann ein elektrischer Traktionsmotor des Fahrzeugs mit Energie betrieben werden, die dem Batteriesystem entnommen wird.

So umfassen elektrisch bzw. elektromotorisch angetriebene oder antreibbare Kraftfahrzeuge, wie beispielsweise Elektro- oder Hybridfahrzeuge, in der Regel einen Elektromotor, mit dem eine oder beide Fahrzeugachsen antreibbar sind. Zur Versorgung mit elektrischer Energie ist der Elektromotor üblicherweise an eine fahrzeuginterne (Hochvolt-)Batterie als elektrischen Energiespeicher angeschlossen.

Um ausreichend Energie für eine gewünschte Betriebsdauer des Fahrzeugs bereitzustellen, können Batteriezellen des Batteriesystems geladen werden.

Unter einem Ladevorgang ist hier und im Folgenden insbesondere ein Aufladen, aber auch ein Entladen des Batteriesystems bzw. der Batteriezelle mittels eines elektrischen Ladestroms (Aufladestrom, Entladestrom) zu verstehen. Bei einem Aufladevorgang wird der Batteriezelle elektrische Energie mittels des (Auf-)Ladestroms zugeführt, wobei bei einem Entladevorgang entsprechend elektrische Energie mittels des (Ent-)Ladestroms aus der Batteriezelle abgeführt wird.

Unter einer insbesondere elektrochemischen Batterie ist hier und im Folgenden insbesondere eine sogenannte sekundäre Batterie (Sekundärbatterie) des Kraftfahrzeugs zu verstehen. Bei einer solchen (sekundären) Fahrzeugbatterie ist eine verbrauchte chemische Energie mittels eines elektrischen (Auf-)Ladevorgangs wiederherstellbar. Derartige Fahrzeugbatterien sind beispielsweise als elektrochemische Akkumulatoren, insbesondere als Lithium-Ionen-Akkumulatoren, ausgeführt.

Zur Erzeugung oder Bereitstellung einer ausreichend hohen Betriebsspannung weisen solche Fahrzeugbatterien typischerweise mindestens ein Batteriezellmodul auf, bei welchem mehrere einzelne elektrochemische Batteriezellen modular verschaltet sind. Alternativ ist ein sogenanntes Cell2Pack-Design möglich, bei welchem die Batteriezellen direkt zu der Fahrzeugbatterie zusammengeschaltet, insbesondere parallelgeschaltet, und nicht vorab zu Modulen zusammengefasst werden.

Batteriezellen, insbesondere Lithium-Ionen-Zellen, können je nach (Batteriezellen-)Temperatur, Bestromungsdauer und Ladezustand lediglich einen bestimmten Ladestrom aufnehmen, ohne Schaden zu nehmen. Dieser Grenzstrom ändert sich mit dem Alterungszustand der Batteriezelle. Weiterhin ergibt sich die Schwierigkeit, dass in einem Batteriesystem mehrere Batteriezellen in Serie oder parallelgeschaltet sein können, welche unterschiedliche Temperaturen und/oder Alterungszustände aufweisen.

Es ist daher notwendig, zu jedem Zeitpunkt den Lade- und Alterungszustand aller Batteriezellen im System der Batterie sowie die kälteste und wärmste Stelle zu kennen. Daher ist es auch notwendig, dass Temperaturgradienten innerhalb einer Batteriezelle bekannt sein müssen, um tatsächlich den kältesten und wärmsten Punkt im gesamten Batteriesystem zu kennen. Diese beiden Punkte bestimmen zusammen mit dem Lade- und Alterungszustand einer jeden Batteriezelle den zu jedem Zeitpunkt maximal möglichen Ladestrom. Da eine ausrelaxierte Batteriezelle kurzfristig einen höheren Strom als den maximal möglichen Dauerstrom aufnehmen kann, muss zudem die zeitliche Reaktion der Batteriezelle auf den Ladestrom bekannt sein. Unter "relaxiert" oder "ausrelaxiert" ist hierbei insbesondere ein beständiger Zustand der Batteriezelle zu verstehen, welcher nach dem Beenden eines Lade- oder Entladestroms erreicht wird.

Es ist ferner gewünscht, dass
- eine möglichst gleiche Ladezustandsverteilung innerhalb des Batteriesystems auftritt,
- die Batteriezellen nicht überladen (beispielsweise Ladeschlussspannung 3.7V, 4.2V, 4.3V, 4.5V) werden.
- ein Ladezustand bekannt ist, insbesondere für eine Reichweiten- bzw. Laufzeitprognose,
- eine Batteriespannung einer Batteriezelle eine vorbestimmte Spannung (beispielsweise 2V, 2.5V, 3V) nicht unterschreitet,
- eine Batteriezelle nicht tiefenentladen wird.

Insbesondere bei stromgeführten Ladeverfahren ist eine genaue Kenntnis der Temperatur der heißesten und kältesten Stelle im Batteriesystem nötig, um mit der richtigen Leistung das Batteriesystem zu laden, ohne die Zellen zu beschädigen. Die Überschreitung der maximalen Temperatur kann zu einer erhöhten Alterung oder zur irreversiblen Schädigung der Batterie führen und im schlimmsten Fall eine exothermische Reaktion auslösen. Die Kenntnis über die Temperatur der heißesten Stelle der Batteriezellen ist damit wichtig für eine hohe Betriebssicherheit. Beim Überschreiten eines bestimmten Temperaturniveaus kann insbesondere die Leistung gedrosselt werden. Dies wird auch als thermisches Derating bezeichnet.

Ein Alterungs- oder Schädigungsprozess in Lithium-Ionen-Batteriezellen mit Flüssigelektrolyten ist beispielsweise das sogenannte Lithium-Plating (Li-Plating), bei welchem sich metallisches Lithium auf der Oberfläche der Anode ablagert und irreversibel mit den Bestandteilen des Elektrolyten reagiert. In der Folge kommt es beispielsweise zu einem Kapazitätsverlust der Batteriezelle aufgrund der Verringerung von freien Lithium-Ionen. Des Weiteren kann dadurch ein elektrischer Kurzschluss innerhalb der Batteriezelle auftreten, wodurch die Batteriezelle bei einem Ladevorgang in Brand geraten kann. Li-Plating tritt auf, wenn das elektrische Potential des Anodenmaterials und dem Elektrolyten unter das Potential von Lithium fällt. Bei dem Ladevorgang treten Überspannungen auf, welche das Potential der Anode reduzieren. Die Überspannung setzt sich hierbei aus einem Separator-/Elektrolytanteil und einem Kathodenanteil sowie einen Anodenanteil zusammen, wobei der Anodenanteil der kritische Anteil hinsichtlich des Li-Platings ist. Bei hohen Ladeströmen sinkt das Anodenpotential unter das Lithiumpotential (0 Volt vs. Li/Li+), wodurch es zur Abscheidung von Lithium-Ionen auf der Anodenoberfläche kommt.

Um insbesondere dieses Li-Plating zu verhindern, kann es gewünscht sein, die Temperatur der kältesten Stelle zu kennen, um eine Stromfreigabe anhand des kältesten Bereiches des Aktivmaterials im Zellinneren zu steuern.

Die relevante Temperatur für die Strom-/Leistungsfreigabe ist regelmäßig die Temperatur eines Aktivmaterials der Batteriezelle im Zellinneren. Eine Messung der Temperatur des Aktivmaterials anhand von physischen Sensoren in der Zelle ist nach aktuellem Stand der Technik nicht möglich. Die Positionierung der Temperaturfühler (die vorzugsweise als NTCs, aber auch als PTC, Thermopaare, Pt100, Pt1000 ausgebildet sein können) erfolgt somit in Näherung an Bereichen von Temperaturspitzen (Cold oder Hotspots) außerhalb der Zelle. Alleine hierdurch gehen wichtige Kenntnisse über die genaue Temperatur verloren.

Deshalb sind Toleranzen einzuplanen und entsprechende Sicherheitsmargen von der Strom-/ Leistungsfreigabe abzuziehen.

Darüber hinaus werden die Temperatursensoren für die Kühlungs- und Heizstrategie in der Batterie verwendet, weshalb eine genaue Messung über die gesamte Betriebstemperatur wünschenswert ist.

Bei der einseitigen Temperierung der Batteriezellen durch z.B. eine Kühlplatte (d.h. es wird nur von einer Seite eine Wärme in die Zellen eingebracht oder entzogen) ergeben sich durch das Vorkonditionieren (Heizen) oder auch Kühlen der Batteriezellen deutliche Temperaturunterschiede auf der kühlplattennahen und -fernen Seite der Batteriezellen, was eine temperaturabhängige Ladeleistungsregelung weiter erschwert.

Eine möglichst gute Ladeleistungsregelung erfordert daher im extremsten Fall zwei Temperatursensoren pro Batteriezelle, nämlich einen Temperatursensor für einen Hotspot und einen Temperatursensor für einen Coldspot. Soll dann noch eine Redundanz durch mindestens zwei Temperatursensoren pro Hotspot und Coldspot bereitgestellt werden, z.B. um Defekte von Temperatursensoren zu erkennen, führt dies zu einer Anzahl von 4 Temperatursensoren pro Batteriezelle. Dies wiederum erhöht auch den Aufwand für eine signaltechnische Anbindung dieser Temperatursensoren, beispielsweise über flexible
printed cables (FPCs), welche die Temperatursensoren mit der Sensorauswerte- und Batteriesteuereinheit (beispielsweise CMCs) verbindet.

Bei Lithium-Ionen-Zellen lässt sich der maximal mögliche Ladestrom beispielsweise mit Hilfe von 3-Elektrodenzellen bestimmen, indem auf das Potential der Anode unter Last geregelt wird. Dies ist nur in einer 3-Elektrodenzelle mit einer Referenzelektrode möglich. Eine Reduktion der Ladestromkennfelder proportional zur Abnahme der Kapazität beziehungsweise zum Anstieg des Innenwiderstands der Batteriezelle im Verlauf der Alterung erfolgt dann im Batteriesystem. Dies ist beispielsweise in dem Artikel SIEG, Johannes [u.a.]: Fast charging of an electric vehicle lithium-ion battery at the limit of the lithium deposition process. In: Journal of Power Sources, Vol. 427, 2019, S. 260-270 und der DE 10 2016 007 479 A1 beschrieben. Diese Methode weist jedoch die Limitierung auf, dass für jede Batteriezelle im System die minimale und maximale Temperatur in der Batteriezelle bekannt sein muss, damit der maximal erlaubte Ladestrom aus dem Kennfeld ausgewählt werden kann. Weiterhin muss der Alterungszustand, vor allem der aktuelle Innenwiderstand, jeder Batteriezelle im Batteriesystem bekannt sein, da bei dem dort beschriebenen Vorgehen die am meisten gealterte Batteriezelle den Strom bestimmt. Weiterhin ist es für Batteriesysteme als Fahrzeugbatterien notwendig, aus der industriell gefertigten Batteriezelle experimentelle Laborzellen mit Referenzelektrode zu bauen.

Weiterhin ist es beispielsweise aus der DE 10 2019 003 465 A1 bekannt, dass mittels der 3-Elektrodenzellen der maximale Pulsstrom für jeden Ladezustand für eine ausrelaxierte Zelle bestimmt werden kann. Diese Methode weist jedoch ähnliche Herausforderungen wie die vorstehend beschriebene Methode auf. Hinzu kommt, dass eine große Menge an Kennfeldern bestimmt und im System gespeichert werden muss.

Allgemein gilt, wenn explizite Ladestromkennfelder im System hinterlegt werden, ist es notwendig, die maximale und minimale Temperatur im System genau zu bestimmen und die Vielzahl von hinterlegten Kennfeldern fehlerfrei anzuwenden. Ein stabiler und sicherer Betrieb muss hierbei durch aufwendige Programmierung und umfassende Tests abgesichert werden.

Weiterhin ist es beispielsweise möglich, dass Ladestromkennfelder in Abhängigkeit von Temperatur, Ladezustand und Pulsdauer durch wiederholte Anwendung auf die Batterie auf ihre Schädlichkeit geprüft und später dem System entsprechend vorgegeben werden.

Die DE 20 2021 203 390 B3 offenbart ein Verfahren zum spannungsgeführten Betrieb eines Batteriesystems während eines Ladevorgangs, aufweisend mindestens eine elektrochemische Batteriezelle.

Es stellt sich daher das technische Problem, ein Verfahren zum Betrieb eines Batteriesystems und ein Batteriesystem zu schaffen, die eine möglichst hohe Betriebssicherheit des Batteriesystems beim Auf- und Entladen ermöglichen, wobei gleichzeitig Herstellungskosten und Bauraumbedarf reduziert werden.

Die Lösung des technischen Problems ergibt sich aus den Gegenständen mit den Merkmalen der unabhängigen Ansprüche. Vorteilhafte Ausgestaltungen und Weiterbildungen sind Gegenstand der Unteransprüche.

Vorgeschlagen wird ein Verfahren zum Betrieb eines Batteriesystems eines Fahrzeugs, wobei das Batteriesystem einen Batteriezellenstapel mit einer Mehrzahl von Batteriezellen aufweist.

Jede Batteriezelle kann quaderförmig oder im Wesentlichen quaderförmig ausgebildet sein und eine Länge, eine Breite und eine Höhe aufweisen. Eine Batteriezelle kann aber auch als Pouchzelle oder Rundezelle, beispielsweise gemäß einem 18650-Format oder einem 21700-Format, das eine Größe und Bauform einer Batteriezelle beschreibt, ausgebildet sein. Dem Batteriezellenstapel kann eine Stapellängsachse, eine Stapelquerachse und eine Stapelhochachse zugeordnet sein. Jede Batteriezelle kann sich dann entlang der Stapellängsrichtung, einer Stapelquerrichtung und einer Stapelhochrichtung erstrecken. Eine Dimension einer Batteriezelle entlang der Stapellängsachse kann dann die Zelllänge, entlang der Stapelquerachse die Zellbreite und entlang der Stapelhochachse die Zellhöhe sein. Die Batteriezellen in einem Batteriezellenstapel können entlang einer Stapellängsrichtung aufeinander folgend angeordnet sein. Der Batteriezellenstapel kann entlang der Stapellängsachse zwei längsachsspezifische Stirnseiten aufweisen, die orthogonal zur Stapellängsachse orientiert sein können. Diese können einer längsachsspezifischen Stirnseite der ersten und letzten Batteriezelle im Batteriezellenstapel entsprechen. Entsprechend kann der Batteriezellenstapel entlang der Stapelquerachse zwei querachsspezifische Stirnseiten aufweisen, die orthogonal zur Stapelquerachse orientiert sein können. Diese Stirnseiten können sich aus den batteriezellspezifischen querachsspezifischen Stirnseiten zusammensetzen. Entsprechend kann der Batteriezellenstapel entlang der Stapelhochachse zwei hochachsspezifische Stirnseiten aufweisen, die orthogonal zur Stapelhochachse orientiert sein können. Diese Stirnseiten können sich aus den batteriezellspezifischen hochachsspezifischen Stirnseiten zusammensetzen.

Weiter umfasst das Batteriesystem eine Einrichtung zur Temperierung der Batteriezellen (Temperierungseinrichtung). Diese kann insbesondere derart ausgebildet und angeordnet sein, dass zum Kühlen thermische Energie vom Batteriezellenstapel zur Temperierungseinrichtung und zum Heizen thermische Energie vom Batteriezellenstapel zur Temperierungseinrichtung übertragen wird. Es ist möglich, dass mit der Temperierungseinrichtung der Batteriezellenstapel nur geheizt, aber nicht gekühlt, nur gekühlt, aber nicht geheizt oder aber beides, gekühlt oder geheizt, werden kann. Die Temperierungseinrichtung ist insbesondere als Kühlplatte ausgebildet. Die Einrichtung zur Temperierung ist an einer ersten Stirnseite des Batteriezellenstapels angeordnet. Diese kann auch als thermisch aktive Seite bezeichnet werden. Die Temperiereinrichtung kann hierbei an dieser Stirnseite anliegen oder aber entlang der Stapelhochachse weniger als ein vorbestimmtes Maß davon beabstandet sein.

Weiter umfasst das Batteriesystem mindestens einen Temperatursensor. Es ist möglich, dass es genau einen Temperatursensor umfasst. Vorzugsweise ist die Anzahl von Temperatursensoren kleiner als die Anzahl von Batteriezellen. Insbesondere kann die Anzahl an Temperatursensoren kleiner als die Hälfte der Batteriezellen sein.

Der mindestens eine Temperatursensor ist in einem der ersten Oberfläche abgewandten Bereich des Batteriezellenstapels angeordnet. Dies kann bedeuten, dass ein Abstand des Temperatursensors von der ersten Stirnseite größer als ein Abstand des Temperatursensors von einer der ersten Stirnseite gegenüberliegenden Stirnseite des Batteriezellenstapels, die auch als thermisch passive Seite bezeichnet werden kann, ist. Insbesondere kann der Abstand jedes Temperatursensors von der ersten Stirnseite größer als der Abstand von der dieser gegenüberliegenden Seite sein. Insbesondere kann das Verhältnis von Abstand zur gegenüberliegenden Seite zu dem Abstand zur ersten Stirnseite kleiner als 1, vorzugsweise kleiner als 0,25 sein.

Insbesondere kann die Einrichtung zur Temperierung an einer der beiden hochachsspezifischen Stirnseiten angeordnet sein. Weiter kann der mindestens eine Temperatursensor im Bereich der weiteren hochachsspezifischen Stirnseite angeordnet sein, z.B. an der weiteren hochachsspezifischen Stirnseite. Dies ist aber nicht zwingend. Es ist auch möglich, dass der mindestens eine Temperatursensor an einer der beiden querachsspezifischen Stirnseiten oder an einer der längsachsspezifischen Stirnseiten angeordnet ist. Der Abstand von den hochachsspezifischen Stirnseiten kann entlang der Stapelhochachse gemessen werden.

Das Verfahren umfasst einen Prüfschritt, wobei darin geprüft wird, ob ein vom Temperatursensor erzeugtes Temperatursignal eine Temperatur repräsentiert, die kleiner als ein vorbestimmter Temperatur-Schwellwert ist. Ist dies der Fall, so wird eine temperatursignalunabhängige Ladeleistungsregelung durchgeführt. Dass die Ladeleistungsregelung temperatursignalunabhängig ist, kann bedeuten, dass das Temperatursignal nicht bei der Ladeleistungsregelung berücksichtigt wird. Insbesondere kann das Temperatursignal kein Eingangssignal für die Ladeleistungsregelung bilden. Beispielhafte temperatursignalunabhängige Ladeleistungsregelungen werden nachfolgend noch näher erläutert.

Das Temperatursignal repräsentiert also die Temperatur zumindest eines Teilbereichs des Batteriezellenstapels im der ersten Stirnseite abgewandten Bereich, also im Bereich der thermisch passiven Seite.

Da erfindungsgemäß nur Temperatursensoren zur Erfassung einer Temperatur auf einer thermisch passiven Seite und nicht zusätzlich auf der thermisch aktiven Seiten vorgesehen werden müssen, ergibt sich in vorteilhafter Weise eine kostengünstigere Herstellung des Batteriesystems mit weniger Temperatursensoren, wobei durch die temperatursignalunabhängige Ladeleistungsregelung die Betriebssicherheit gewährleistet werden kann. Auch ein Aufwand für die signaltechnische Anbindung der Temperatursensoren wird reduziert, was die Herstellungskosten sowie die Fehleranfälligkeit weiter verringert. Da die thermisch aktive Seite aktiv temperiert, insbesondere gekühlt, wird, kann davon ausgegangen werden, dass diese sich nicht oder nicht vor der thermisch passiven Seite auf eine Temperatur über einer maximal zulässigen Betriebstemperatur ansteigt. Mit anderen Worten kann also davon ausgegangen werden, dass thermisch kritische Überhitzungen nur oder zuerst im Bereich der thermisch passiven Seite auftreten. Somit kann ein Überwachen der Temperatur auf der thermisch passiven Seite ausreichen, um die Betriebssicherheit bei einer Erhitzung auf eine kritische Temperatur zu gewährleisten, insbesondere indem das eingangs erläuterte Derating auf Basis des Temperatursignals eingeleitet wird. Aufgrund der temperatursignalunabhängige Ladeleistungsregelung kann aber auch die Betriebssicherheit bei Betriebstemperaturen unterhalb der maximal zulässigen Betriebstemperatur gewährleistet werden, ohne dass hierfür die Temperatur auf der thermisch aktiven Seite erfasst werden müsste. Insbesondere bei einem Lastfall mit starker Kühlungsleistung und der daraus ergebenen großen Temperaturspreizung innerhalb einer Batteriezelle können Alterungsprozesse, wie Lithium-Plating, durch die temperatursignalunabhängige Ladeleistungsregelung in zuverlässiger Weise vermieden werden.

In einer weiteren Ausführungsform wird eine temperatursignalabhängige Ladeleistungsregelung der Batteriezellen durchgeführt, wenn die repräsentierte Temperatur größer als der oder gleich dem Temperatur-Schwellwert ist. Insbesondere kann in diesem Fall ein thermisches Derating durchgeführt werden, also die Ladeleistung, insbesondere die Entladeleistung, reduziert werden. Hierdurch wird, wie vorhergehend bereits erläutert, die Betriebssicherheit erhöht, da ein Überschreiten einer maximal zulässigen Temperatur und die damit verbundene Alterung und/oder Schädigung vermieden werden kann.

In einer weiteren Ausführungsform wird die Einrichtung zur Temperierung in Abhängigkeit einer vom Temperatursensor erfassten Temperatur betrieben. Z.B. kann die Temperiereinrichtung in temperaturgeregelter Weise betrieben werden, insbesondere derart, dass die Differenz zwischen einer Soll-Temperatur und einer vom Temperatursensor erfassten Temperatur minimiert wird.

In einer weiteren Ausführungsform wird zur temperatursignalunabhängigen Ladeleistungsregelung ein Verfahren zum spannungsgeführten Betrieb des Batteriesystems durchgeführt. Ein solches Verfahren ist in der eingangs bereits erläuterten DE 10 2021 203 390 B3 erläutert. So ist dort insbesondere beschrieben, dass die Bestimmung des maximalen Ladestroms, sofern ein schädigender Prozess als limitierende Faktor angenommen wird, zu einer von der Temperatur quasi unabhängigen Spannungstrajektorie führt. Insbesondere weist eine Zellspannung gegenüber einem Ladezustand einer Batteriezelle keine oder lediglich eine geringe Temperaturabhängigkeit auf. Dies bedeutet, dass die Zellspannung gegenüber dem Ladezustand der Batteriezelle einen nahezu konstanten Verlauf für unterschiedliche Batteriezelltemperaturen aufweist. Dadurch ist es möglich, den Ladevorgang anhand lediglich einer einzigen Referenzkurve zu steuern und/oder zu regeln. Insbesondere ist somit keine Temperaturüberwachung jeder einzelnen Batteriezelle im Batteriesystem notwendig. Eine aufwendige Temperaturüberwachung durch direkte Messung oder Modellbildung jeder einzelnen Batteriezelle kann somit entfallen, wobei gleichzeitig ein sicherer Betrieb der Batteriezellen gewährleistet werden kann.

Alternativ kann die temperatursignalunabhängige Ladeleistungsregelung in Abhängigkeit einer Zelleigenschaft erfolgen. Eine Zelleigenschaft kann insbesondere ein Zell(innen)druck und/oder eine Zelldicke und/oder ein Zellinnenwiderstand und/oder eine Zellkapazität sein und von der Zelltemperatur verschieden sein.

Die Ladeleistung kann in Abhängigkeit dieser Zelleigenschaft geregelt oder eingestellt werden, insbesondere derart, dass eine Abweichung eines Ist-Werts der Zelleigenschaft von einem Sollwert der Zelleigenschaft minimiert wird. Der Ist-Wert der entsprechenden Größe kann hierbei sensorisch erfasst oder rechnerisch in Abhängigkeit von anderen erfassten Größen bestimmt werden.

Z.B. kann die Zelleigenschaft mit einem High Precision Coulometrie Verfahren bestimmt werden.

Der Ist-Wert und der Sollwert können hierbei betriebszustandsabhängige Werte sein, insbesondere ladezustandsabhängige Werte. Der Sollwert kann für verschiedene Betriebszustände, insbesondere Ladezustände, vorab bestimmt werden, insbesondere derart, dass Batteriezelle nicht beschädigt wird, wenn der Ist-Wert auf den Sollwert eingestellt wird.

Zur Bestimmung der Sollwerte kann eine betriebszustandsabhängige Spannungskurve, also z.B. ein Verlauf der Zellspannung über dem Ladezustand, ermittelt werden, wobei in Abhängigkeit der derart ermittelten Spannungskurve die betriebszustandsabhängige Zelleigenschaft, also die Soll-Zelleigenschaft, bestimmt wird. Diese Spannungskurve kann auf verschiedene Weisen bestimmt werden, z.B. basierend auf einer Vermessung einer 3-Elektroden-Laborzelle oder mit einem High Precision Coulometrie Verfahren.

Bei Verwendung einer 3-Elektroden-Laborzelle kann hierfür z.B. eine Referenzelektrode auf ein bestimmtes Anodenpotential geregelt wird. Ebenfalls kann es bei der Verwendung der 3-Elektroden-Laborzelle sinnvoll sein, dass eine Transformation der laborzellenbasiert bestimmten Zelleigenschaft auf die Eigenschaft einer tatsächlich verwendeten Zelleigenschaft erfolgt und/oder eine vorbestimmte Sicherheitsmarge bei der Bestimmung der Soll-Zelleigenschaft berücksichtigt wird.

Alternativ kann die Spannungskurve (und somit auch die Soll-Zelleigenschaft) auf simulationsbasiert, z.B. basierend auf einem Halbzellmodell, oder auf Basis einer vorbestimmten Zuordnung, z.B. in Form einer Look-Up-Tabelle, bestimmt werden.

Hierdurch ergibt sich in vorteilhafter Weise auch in einem Temperaturbereich unterhalb der maximal zulässigen Temperatur eine hohe Betriebssicherheit, da die vorgeschlagenen Verfahren in diesem Temperaturbereich ein schädigungsfreies Laden der Batteriezellen ermöglichen.

In einer weiteren Ausführungsform ist die erste Stirnseite in einer Ebene angeordnet, die von einer Stapellängs- und einer Stapelquerachse aufgespannt ist. Der mindestens eine Temperatursensor ist in einer Raumrichtung parallel zu einer Stapellängsachse und/oder in einer Raumrichtung parallel zur Stapelquerachse in einem zentralen Bereich des Batteriezellenstapels angeordnet. Der zentrale Bereich kann Beispiel ein Bereich sein, dessen Grenzwerte mehr als das 0.2fache, vorzugsweise mehr als das 0.4fache, der Dimension entlang der entsprechenden Achse von den achsspezifischen Stirnseiten beabstandet sind. Da davon ausgegangen werden kann, dass sich der Batteriezellenstapel in dem zentralen Bereich am schnellsten bzw. am stärksten erwärmt, kann hierdurch die Betriebssicherheit in vorteilhafter Weise besonders gut sichergestellt werden.

In einer weiteren Ausführungsform umfasst das Batteriesystem eine Mehrzahl von Temperatursensoren, die im abgewandten Bereich angeordnet sind, wobei die Mehrzahl von Temperatursensoren in Abhängigkeit von teilbereichsspezifischen Wäremeaustauscheigenschaften des Batteriezellenstapels angeordnet sind. Insbesondere kann ein bereichsspezifischer Temperatursensor zur Erfassung der Temperatur eines Teilbereichs vorgesehen sein, wenn eine Temperatur des Teilbereichs in einem vorbestimmten Betriebszustand des Batteriesystems nicht oder nicht mehr als ein vorbestimmtes Maß bzw. mit einer Temperaturänderungsrate, die kleiner als ein vorbestimmter Schwellwert ist, durch Wärmeübertragung verändert, insbesondere verringert, werden kann. Die Wärmeübertragung kann eine Wärmeübertragung in benachbarte Bereiche sein, insbesondere ein passive, also nicht durch Arbeit bedingte, Wärmeübertragung.

Weitere Temperatursensoren können in vorbestimmten Teilbereichen des Batteriezellenstapels angeordnet werden, die einem thermischen Eintrag von Wärmequellen direkt ausgesetzt sind, z.B. von einem Relais, einer leistungselektronischen Komponente, einem Schütz, einer Sicherung oder einem Hochvolt-Verbinder. Dass diese Teilbereiche dem thermischen Eintrag direkt ausgesetzt sind, kann bedeuten, dass eine thermische Leitfähigkeit einer Übertragungsstrecke für thermische Energie zwischen der Wärmequelle und dem vorbestimmten Teilbereich größer als eine vorbestimmte Leitfähigkeit ist.

In einer weiteren Ausführungsform verändert sich eine Verteilungsdichte von Temperatursensoren des Batteriesystems entlang einer Raumrichtung parallel zu einer Stapellängsachse und/oder in einer Raumrichtung parallel zur Stapelquerachse. Die Verteilungsdichte kann z.B. eine Anzahl von Temperatursensoren pro einer vorbestimmten Längeneinheit sein. Die vorbestimmte Längeneinheit kann insbesondere eine maximale Distanz zwischen zwei entlang der entsprechenden Raumrichtung unmittelbar benachbarten Temperatursensoren sein. So können insbesondere in Randbereichen des Batteriezellenstapels entlang der Raumrichtung weniger Temperatursensoren als in dem vorgenannten zentralen Bereich angeordnet sein. Alternativ oder kumulativ kann eine Verteilungsdichte im Randbereich/in den Randbereichen geringer als im zentralen Bereich sein. Hierdurch ergibt sich in vorteilhafter Weise ein guter Kompromiss zwischen einer Verbesserung der Betriebssicherheit (da die Temperaturen in mehreren Teilbereichen erfasst werden) und den Herstellungskosten, da die Temperaturen nur in kritischen Teilbereichen erfasst werden. Hierbei kann davon ausgegangen werden, dass sich Randbereiche im Vergleich zu dem zentralen Bereich weniger schnell bzw. stark erwärmen und die Wahrscheinlichkeit, dass in solchen Randbereichen eine Überhitzung zeitlich vor dem zentralen Bereich auftritt, gering ist.

In einer weiteren Ausführungsform ist eine Messgenauigkeit des Temperatursensors für verschiedene Temperaturbereiche auf verschiedene Messgenauigkeiten eingestellt. Hierbei kann davon ausgegangen werden, dass der Temperatursensor eine einstellbare Messgenauigkeit aufweist. Ein solcher Temperatursensor kann z.B. ein NTC-Sensor (negative temperature coefficient sensor) sein. Dessen bereichsspezifische Messgenauigkeit kann beispielsweise durch die Anordnung eines Vorwiderstands eingestellt werden. Durch die Wahl des Vorwiderstands kann die Empfindlichkeit eines vom NTC verwendeten Spannungsteilers in bestimmten Temperaturbereichen angepasst werden, wodurch die Messgenauigkeit in diesen Temperaturbereichen verbessert werden kann. Die Verwendung eines NTC als Temperatursensor sowie die Einstellung der Messgenauigkeit über einen Vorwiderstand ist jedoch rein exemplarisch. Selbstverständlich können auch alternative Temperatursensoren und/oder alternative Verfahren zur Einstellung von Messgenauigkeiten verwendet werden.

Hierdurch kann eine Betriebssicherheit weiter verbessert werden, wobei jedoch Herstellungskosten gesenkt werden können. Dies kann insbesondere erreicht werden, da der Temperatursensor nicht über den gesamten Bereich der möglichen Betriebstemperaturen des Batteriezellenstapels die gleiche Messgenauigkeit aufweisen muss, was die Verwendung von im Vergleich günstigen Temperatursensoren ermöglicht.

In einer weiteren Ausführungsform ist eine Messgenauigkeit in einem ersten Temperaturbereich geringer als eine Messgenauigkeit in einem weiteren Temperaturbereich, wobei ein Maximalwert des ersten Temperaturbereichs kleiner als ein Minimalwert des weiteren Temperaturbereichs ist und wobei eine Differenz zwischen Temperatur-Schwellwert und dem Minimalwert kleiner ist als eine Differenz zwischen Temperatur-Schwellwert und dem Maximalwert. Der weitere Temperaturbereich kann insbesondere den vorhergehend erläuterten Temperatur-Schwellwert umfassen. Dieser kann insbesondere größer als der Minimalwert des weiteren Temperaturbereichs sein. Der Maximalwert des weiteren Temperaturbereichs kann größer als der oder gleich dem Temperatur-Schwellwert sein. Somit ergibt sich in vorteilhafter Weise eine weitere Verbesserung der Betriebssicherheit, da insbesondere das Annähern an oder sogar das Überschreiten des vorbestimmten Temperatur-Schwellwerts mit einer vergleichsweise hohen Messgenauigkeit erfasst und die dann gegebenenfalls eingeleitete temperatursignalabhängige Ladeleistungsregelung auf im Vergleich genauen Temperaturwerten basiert.

Weiter vorgeschlagen wird ein Batteriesystem eines Fahrzeugs, wobei das Batteriesystem einen Batteriezellenstapel mit einer Mehrzahl von Batteriezellen, eine Einrichtung zur Temperierung der Batteriezellen und mindestens einen Temperatursensor umfasst, wobei die Einrichtung zur Temperierung an einer ersten Stirnseite des Batteriezellenstapels und der mindestens eine Temperatursensor in einem der ersten Seite abgewandten Bereich des Batteriezellenstapels angeordnet ist. Dies wurde vorhergehend erläutert.

Weiter umfasst das Batteriesystem mindestens eine Steuer- und Auswerteeinrichtung, wobei es konfiguriert ist, ein Verfahren zum Betrieb eines Batteriesystems gemäß einer der in dieser Offenbarung beschriebenen Ausführungsformen durchzuführen. Somit können mit der Vorrichtung die entsprechend beschriebenen technischen Vorteile erreicht werden.

Die Steuer- und Auswerteeinrichtung kann als Recheneinrichtung ausgebildet sein, die als Mikrocontroller oder integrierte Schaltung ausgebildet ist oder eine(n) solche(n) umfassen kann. Insbesondere kann mit der Steuer- und Auswerteeinrichtung das vom Temperatursensor erzeugte Temperatursignal empfangen und der erläuterte Prüfschritt sowie gegebenenfalls die temperatursignalunabhängige und temperatursignalabhängige Ladeleistungsregelung durchgeführt werden. Ebenfalls kann mit der Steuer- und Auswerteeinrichtung die Einrichtung zur Temperierung betrieben werden.

Weiter beschrieben wird ein Fahrzeug, insbesondere ein Elektro- oder Hybridfahrzeug, mit einem Batteriesystem gemäß einer der in dieser Offenbarung beschriebenen Ausführungsformen.

Die Erfindung wird anhand von Ausführungsbeispielen näher erläutert. Die Figuren zeigen:
- Fig. 1: ein schematisches Flussdiagramm eines erfindungsgemäßen Verfahrens,
- Fig. 2: ein schematisches Blockdiagramm eines erfindungsgemäßen Batteriesystems,
- Fig. 3a: eine schematische, perspektivische Ansicht eines Batteriezellenstapels,
- Fig. 3b: eine schematische, perspektivische Ansicht eines Batteriezellenstapels,
- Fig. 4a: eine unangepasste Sensorkennlinie,
- Fig. 4b: eine angepasste Sensorkennlinie und
- Fig. 5: schematische zeitliche Verläufe einer Temperatur, einer Ladeleistung und eines Ladezustands bei einer Anwendung des erfindungsgemäßen Verfahrens.

Nachfolgend bezeichnen gleiche Bezugszeichen Elemente mit gleichen oder ähnlichen technischen Eigenschaften.

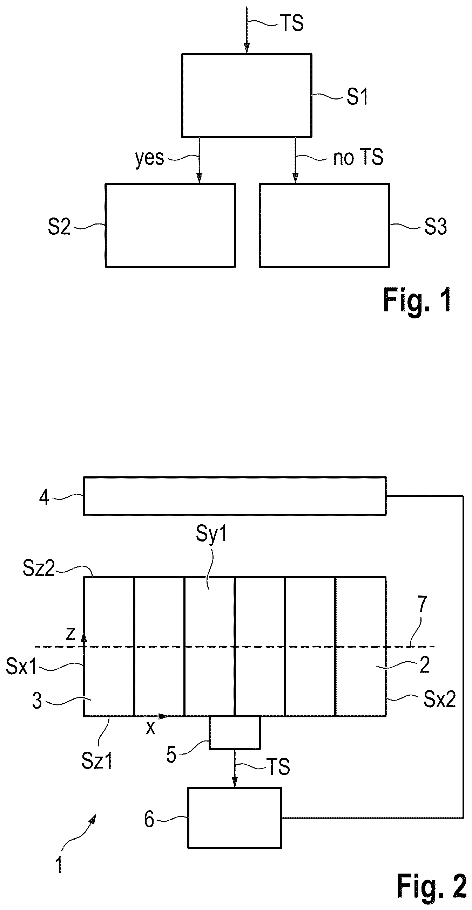

Fig. 1 zeigt ein schematisches Flussdiagramm eines erfindungsgemäßen Verfahrens zum Betrieb eines Batteriesystems 1 (siehe Fig. 2) eines Fahrzeugs. In dem Verfahren wird in einem Prüfschritt S1 geprüft, ob ein Temperatursignal TS, welches von einem Temperatursensor 5 des Batteriesystems 1 erzeugt wurde und eine Temperatur eines Teilbereichs des Batteriezellenstapels 2 repräsentiert, kleiner als ein vorbestimmter Temperatur-Schwellwert ist. Ist dies der Fall, so wird in einem Normalbetriebsschritt S2, insbesondere durch eine Steuer- und Auswerteeinrichtung 6, eine temperatursignalunabhängige Ladeleistungsregelung des Batteriesystems 1 durchgeführt. Ist dies nicht der Fall, so wird in einem Sicherheitsbetriebsschritt S3 insbesondere mit der Steuer- und Auswerteeinrichtung 6 eine temperatursignalabhängige Ladeleistungsregelung des Batteriesystems 1 durchgeführt. Hierzu kann das Temperatursignal TS an die Steuer- und Auswerteeinrichtung 6 übertragen werden. Insbesondere kann mit dieser temperatursignalabhängigen Ladeleistungsregelung eine Ladeleistung gedrosselt werden, um einen weiteren Temperaturanstieg zu verhindern bzw. die Temperatur zu verringern.

Die temperatursignalabhängige Ladeleistungsregelung kann insbesondere gemäß einem Verfahren zum spannungsgeführten Betrieb des Batteriesystems 1 erfolgen. Dies wurde vorhergehend bereits erläutert.

Weiter ist es möglich, dass die Steuer- und Auswerteeinrichtung einen Betrieb der Einrichtung 4 zur Temperierung in Abhängigkeit des Temperatursignals TS steuert bzw. regelt.

Fig. 2 zeigt ein schematisches Blockdiagramm eines erfindungsgemäßen Batteriesystems 1. Das Batteriesystem 1 umfasst einen Batteriezellenstapel 2 mit einer Mehrzahl von Batteriezellen 3, eine Einrichtung 4 zur Temperierung der Batteriezellen 3 und mindestens einen Temperatursensor 5 sowie eine Steuer- und Auswerteeinrichtung 6. Diese ist signaltechnisch mit dem Temperatursensor 5 verbunden. Der Temperatursensor 5 erzeugt ein Temperatursignal TS, welches eine Temperatur eines Teilbereichs des Batteriezellenstapels 2 repräsentiert. Dieses wird zur Steuer- und Auswerteeinrichtung 6 übertragen. Mit dieser wird der in Bezug auf das in Fig. 1 dargestellte Verfahren der Prüfschritt S1 sowie der Normalbetriebsschritt S2 bzw. der Sicherheitsbetriebsschritt S3 durchgeführt.

In Fig. 2 ist dargestellt, dass die Batteriezellen 3 quaderförmig ausgebildet sind. Ebenfalls dargestellt ist ein dem Batteriezellenstapel 2 zugeordnetes Koordinatensystem mit einer Stapellängsachse x, eine Stapelquerachse y (die in Fig. 2 senkrecht zur Zeichenebene orientiert ist) und eine Stapelhochachse z. Pfeile in Fig. 2 stellen eine Orientierung der Achsen x, y, z dar, die ein kartesisches Koordinatensystem bilden. Jede Batteriezelle 3 kann sich dann mit einer Zelllänge entlang der Stapellängsachse x, mit einer Zellbreite entlang der Stapelquerachse y und einer Zellhöhe entlang der Stapelhochachse z erstrecken.

Die Batteriezellen 3 in dem Batteriezellenstapel 2 sind entlang der Stapellängsachse x aufeinander folgend angeordnet. Der Batteriezellenstapel 2 weist entlang der Stapellängsachse x zwei längsachsspezifischen Stirnseiten Sx1, Sx2 auf, die orthogonal zur Stapellängsachse x orientiert sind. Diese entsprechen einer längsachsspezifischen Stirnseite der ersten und letzten Batteriezelle 3 im Batteriezellenstapel 2. Weiter weist der Batteriezellenstapel 2 entlang der Stapelquerachse y zwei querachsspezifische Stirnseiten Sy1 auf, die orthogonal zur Stapelquerachse y orientiert sind. Diese Stirnseiten Sy1 können sich aus den batteriezellspezifischen querachsspezifischen Stirnseiten zusammensetzen. Ebenfalls weist der Batteriezellenstapel 2 entlang der Stapelhochachse z zwei hochachsspezifische Stirnseiten Sz1, Sz2 auf, die orthogonal zur Stapelhochachse z orientiert sind. Diese Stirnseiten können sich aus den batteriezellspezifischen hochachsspezifischen Stirnseiten zusammensetzen.

Die Einrichtung 4 zur Temperierung ist an einer ersten Stirnseite des Batteriezellenstapels 2, nämlich einer der beiden hochachsspezifischen Stirnseiten Sz2, angeordnet. Der mindestens eine Temperatursensor 5 ist in einem dieser ersten Stirnseite abgewandten Bereich des Batteriezellenstapels 2 angeordnet. Bezogen auf eine Referenzebene 7, die orthogonal zur Stapelhochachse z orientiert ist und den Batteriezellenstapel 2 mittig (also auf der Hälfte seiner Höhe entlang der Stapelhochachse z) schneidet, sind also die Einrichtung 4 und der Temperatursensor 5 in verschiedenen Raumhälften angeordnet.

In Fig. 2 ist dargestellt, dass das Batteriesystem 1 genau einen Temperatursensor 5 umfasst, der an der verbleibenden hochachsspezifischen Stirnseite Sz1 angeordnet ist.

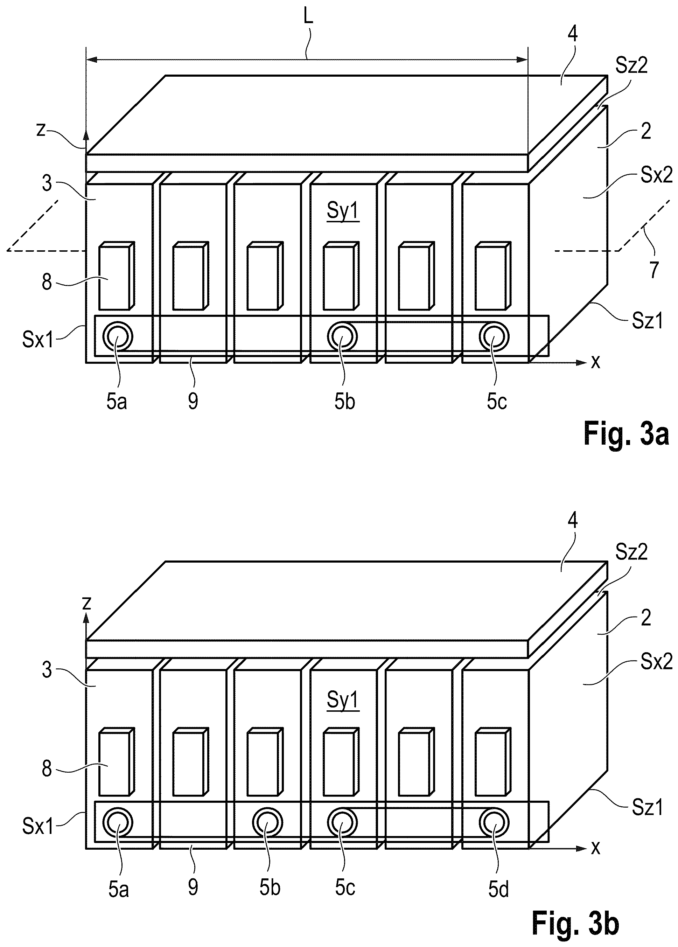

Fig. 3a zeigt eine schematische, perspektivische Ansicht eines Batteriezellenstapels 2 eines Batteriesystems 1 gemäß einer weiteren erfindungsgemäßen Ausführungsform. Das Batteriesystem 1 umfasst eine als Kühlplatte ausgebildete Einrichtung 4 zur Temperierung, die an einer zweiten hochachsspezifischen Stirnseite Sz2 des Batteriezellenstapels 2 angeordnet ist. Diese bildet eine thermisch aktive Seite des Batteriezellenstapels 2. Weiter umfasst das Batteriesystem 1 drei Temperatursensoren 5a, 5b, 5c, die in einem dieser zweiten hochachsspezifischen Stirnseite Sz2 abgewandten Bereich des Batteriezellenstapels 2 angeordnet sind, wobei diese Temperatursensoren 5a, 5b, 5c an einer ersten querachsspezifischen Stirnseite Sy1 des Batteriezellenstapels 2 angeordnet sind. Dargestellt sind auch Anschlüsse 8 der Batteriezellen 3, wobei der Übersichtlichkeit halber nur eine Batteriezelle 3 und ein Anschluss 8 mit einem Bezugszeichen versehen ist. Auch die Anschlüsse sind an der ersten querachsspezifischen Stirnseite Sy1 angeordnet. Wie auch in Fig. 2 sind jedoch die Einrichtung 4 zur Temperierung und die Temperatursensoren 5a, 5b, 5c in Bezug auf eine Referenzebene 7, die orthogonal zur Stapelhochachse z orientiert ist und den Batteriezellenstapel 2 mittig (also auf der Hälfte seiner Höhe entlang der Stapelhochachse z) schneidet, in verschiedenen Raumhälften angeordnet. Dargestellt ist auch eine Leiterbahn 9, über die die Temperatursensoren 5a, 5b, 5c mit der in Fig. 2 dargestellten Steuer- und Auswerteeinrichtung 6 signaltechnisch verbunden sind.

Ein erster und ein dritter Temperatursensor 5a, 5c sind entlang der Stapellängsachse x in einem Randbereich des Batteriezellenstapels 2 angeordnet. Ein zweiter Temperatursensor 5b ist in einem zentralen Bereich angeordnet. Der zentrale Bereich ist im dargestellten Ausführungsbeispiel ein Bereich, der entlang einer Länge L des Batteriezellenstapels 2, die entlang der Stapellängsachse x gemessen wird, in einem Bereich von 1/3 dieser Länge (einschließlich) bis zu 2/3 dieser Länge (einschließlich) angeordnet ist. Folglich ist ein erster Randbereich ein Bereich von der ersten längsachsspezifischen Stirnseite Sx1 (einschließlich) bis zu 1/3 der Länge (ausschließlich) und ein weiterer Randbereich ein Bereich von 2/3 der Länge (ausschließlich) bis zu der zweiten längsachsspezifischen Stirnseite Sx2 (einschließlich).

Fig. 3b zeigt eine schematische, perspektivische Ansicht eines Batteriezellenstapels 2 eines Batteriesystems 1 gemäß einer weiteren erfindungsgemäßen Ausführungsform. Im Unterschied zu der in Fig. 3a dargestellten Ausführungsform umfasst das Batteriesystem 1 vier Temperatursensoren 5a, 5b, 5c, 5d. Ein erster und ein vierter Temperatursensor 5a, 5d sind entlang der Stapellängsachse x jeweils in den in Bezug auf die in Fig. 3a dargestellte Ausführungsform erläuterten Randbereichen angeordnet.

Im zentralen Bereich jedoch sind ein zweiter und ein dritter Temperatursensor 5b, 5c angeordnet. Somit ändert sich also eine Verteilungsdichte der Temperatursensoren 5a, 5b, 5c, 5d entlang einer Raumrichtung parallel zur Stapellängsachse x.

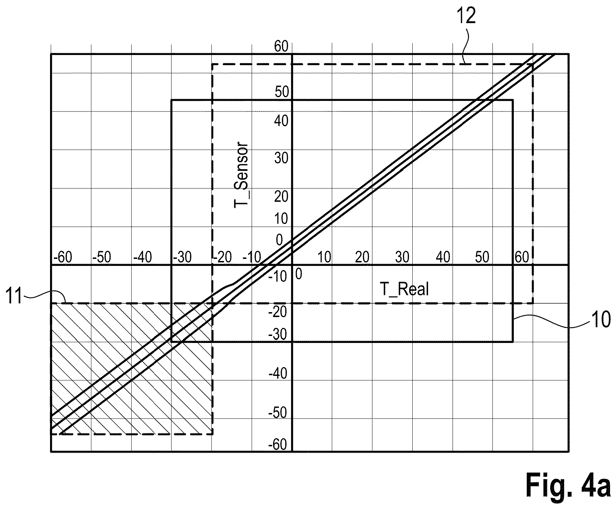

Fig. 4a zeigt eine für ein erfindungsgemäßes Verfahren unangepasste Sensorkennlinie eines Temperatursensors 5. Dargestellt ist ein Betriebstemperaturbereich 10 des Batteriezellenstapels 2, der Temperaturen von -30 °C bis +55° C umfasst. Der Temperatursensor 5 kann hierbei in einem ersten Temperaturbereich 11 von -60 °C bis -20 °C die Temperatur mit einer Messgenauigkeit von ± 3 °C und in einem weiteren Temperaturbereich 12 von 20 °C bis 65 °C die Temperatur mit einer Messgenauigkeit von ± 2 °C erfassen.

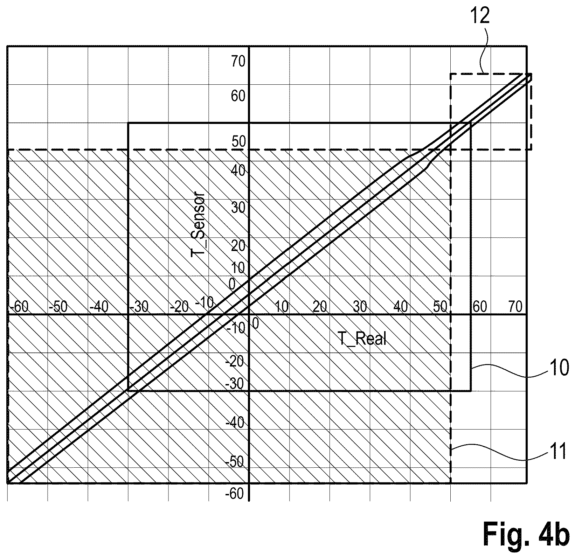

Fig. 4b zeigt eine für ein erfindungsgemäßes Verfahren angepasste Sensorkennlinie eines Temperatursensors 5. Erneut dargestellt ist ein Betriebstemperaturbereich des Batteriezellenstapels 2, der Temperaturen von -30 °C bis +55° C umfasst. Der Temperatursensor 5 kann hierbei in einem ersten Temperaturbereich 11 von -60 °C bis 50 °C die Temperatur mit einer Messgenauigkeit von ± 4 °C und in einem weiteren Temperaturbereich 12 von 50 °C bis 65 °C die Temperatur mit einer Messgenauigkeit von ± 1 °C erfassen. Wird angenommen, dass der im Prüfschritt S1 (siehe Fig. 1) verwendete vorbestimmte Temperatur-Schwellwert bei 55 °C, also der oberen Grenze des Betriebstemperaturbereichs 10, liegt, so ist ersichtlich, dass mit der angepassten Sensorkennlinie eine genauere Erfassung der Temperatur in einem Bereich dieser oberen Grenze ermöglicht wird. Insbesondere wird hiermit das Risiko minimiert, dass im Fall einer Ist-Temperatur größer als 55 °C in fehlerhafter Weise eine Temperatur unter 55 °C gemessen wird.

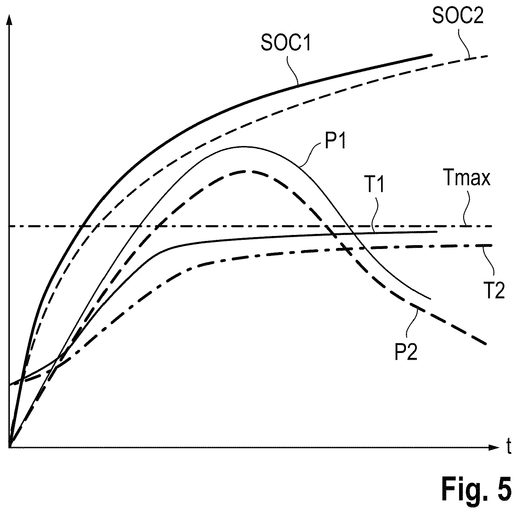

Fig. 5 zeigt schematische zeitliche Verläufe einer Temperatur T1, einer Ladeleistung P1 und eines Ladezustands SOC1 bei einer Anwendung des erfindungsgemäßen Verfahrens, die mit einer durchgezogenen Linie dargestellt ist, sowie entsprechende zeitliche Verläufe T2, P2, SOC2 für ein Verfahren gemäß dem Stand der Technik, das auch Temperatursignale von Temperatursensoren berücksichtigt, die im Bereich der ersten Stirnseite angeordnet sind. Es ist erkennbar, dass mit dem erfindungsgemäßen Verfahren eine im Vergleich höhere Ladeleistung, ein im Vergleich höherer Ladezustand und eine geringere Differenz zur maximal zulässigen Betriebstemperatur Tmax erreicht werden kann, wobei jedoch sichergestellt ist, dass diese maximal zulässige Betriebstemperatur Tmax nicht überschritten wird. Die maximal zulässige Betriebstemperatur Tmax kann dem im Prüfschritt S1 verwendeten vorbestimmten Temperatur-Schwellwert entsprechen.

### Bezugszeichenliste

- 1: Betriebssystem
- 2: Batteriezellenstapel
- 3: Batteriezelle
- 4: Einrichtung zur Temperierung der Batteriezelle
- 5, 5a, 5b, 5c, 5d: Temperatursensoren
- 6: Steuer- und Auswerteeinheit
- 7: Referenzebene
- 8: Anschlüsse
- 9: Leiterbahn
- 10: Betriebstemperaturbereich
- 11: erster Temperaturbereich
- 12: weiterer Temperaturbereich
- S1: Prüfschritt
- S2: Normalbetriebsschritt
- S3: Sicherheitsbetriebsschritt
- TS: Temperatursignal
- T1, T2: zeitlicher Verlauf der Temperatur
- P1, P2: zeitlicher Verlauf der Ladeleistung
- x: Stapellängsachse
- y: Stapelquerachse
- z: Stapelhochachse
- Sx1, Sx2: längsachsspezifische Stirnseiten
- Sy1: querachsspezifische Stirnseite
- Sz1, Sz2: hochachsspezifische Stirnseiten

## Patentansprüche

1. Verfahren zum Betrieb eines Batteriesystems eines Fahrzeugs, wobei das Batteriesystem einen Batteriezellenstapel mit einer Mehrzahl von Batteriezellen, eine Einrichtung zur Temperierung der Batteriezellen und mindestens einen Temperatursensor umfasst, wobei die Einrichtung zur Temperierung an einer ersten Stirnseite des Batteriezellenstapels und der mindestens eine Temperatursensor in einem der ersten Stirnseite abgewandten Bereich des Batteriezellenstapels angeordnet ist, wobei das Verfahren die folgenden Schritte umfasst:
a) Prüfen, ob ein vom Temperatursensor erzeugtes Temperatursignal eine Temperatur repräsentiert, die kleiner als ein vorbestimmter Temperatur-Schwellwert ist,
b) Durchführen einer temperatursignalunabhängigen Ladeleistungsregelung, wenn die repräsentierte Temperatur kleiner als der Temperatur-Schwellwert ist.

2. Verfahren nach Anspruch 1, **dadurch gekennzeichnet, dass** eine temperatursignalabhängige Ladeleistungsregelung durchgeführt wird, wenn die repräsentierte Temperatur größer als der oder gleich dem Temperatur-Schwellwert ist.

3. Verfahren nach einem der vorangegangenen Ansprüche, **dadurch gekennzeichnet, dass** die Einrichtung zur Temperierung in Abhängigkeit einer vom Temperatursensor erfassten Temperatur betrieben wird.

4. Verfahren nach einem der vorangegangenen Ansprüche, **dadurch gekennzeichnet, dass** zur temperatursignalunabhängigen Ladeleistungsregelung ein Verfahren zum spannungsgeführten Betrieb des Batteriesystems durchgeführt wird oder dass die temperatursignalunabhängige Ladeleistungsregelung in Abhängigkeit eines Zelldrucks und/oder einer Zelldicke und/oder eines Zellinnenwiderstands erfolgt.

5. Verfahren nach einem der vorangegangenen Ansprüche, **dadurch gekennzeichnet, dass** die erste Stirnseite in einer Ebene angeordnet ist, die von einer Stapellängs- und einer Stapelquerachse aufgespannt ist, wobei der mindestens eine Temperatursensor in einer Raumrichtung parallel zu einer Stapellängsachse und/oder in einer Raumrichtung parallel zur Stapelquerachse in einem zentralen Bereich des Batteriezellenstapels angeordnet ist.

6. Verfahren nach Anspruch 5, **dadurch gekennzeichnet, dass** das Batteriesystem eine Mehrzahl von Temperatursensoren umfasst, die im abgewandten Bereich angeordnet sind, wobei die Mehrzahl von Temperatursensoren in Abhängigkeit von teilbereichsspezifischen Wärmeaustauscheigenschaften des Batteriezellenstapels angeordnet sind.

7. Verfahren nach Anspruch 5 oder 6, **dadurch gekennzeichnet, dass** sich eine Verteilungsdichte von mehreren Temperatursensoren entlang einer Raumrichtung parallel zu einer Stapellängsachse und/oder in einer Raumrichtung parallel zur Stapelquerachse verändert.

8. Verfahren nach einem der vorangegangenen Ansprüche, **dadurch gekennzeichnet, dass** eine Messgenauigkeit des Temperatursensors für verschiedene Temperaturbereiche auf verschiedene Messgenauigkeiten eingestellt ist.

9. Verfahren nach Anspruch 8, **dadurch gekennzeichnet, dass** eine Messgenauigkeit in einem ersten Temperaturbereich geringer als eine Messgenauigkeit in einem weiteren Temperaturbereich ist, wobei ein Maximalwert des ersten Temperaturbereichs kleiner als ein Minimalwert des weiteren Temperaturbereichs ist und wobei eine Differenz zwischen Temperatur-Schwellwert und dem Minimalwert kleiner ist als eine Differenz zwischen Temperatur-Schwellwert und dem Maximalwert.

10. Batteriesystem eines Fahrzeugs, wobei das Batteriesystem einen Batteriezellenstapel mit einer Mehrzahl von Batteriezellen, eine Einrichtung zur Temperierung der Batteriezellen und mindestens einen Temperatursensor umfasst, wobei die Einrichtung zur Temperierung an einer ersten Stirnseite des Batteriezellenstapels und der mindestens eine Temperatursensor in einem der ersten Seite abgewandten Bereich des Batteriezellenstapels angeordnet ist, wobei das Batteriesystem mindestens eine Steuer- und Auswerteeinrichtung umfasst und konfiguriert, ein Verfahren gemäß einem der Ansprüche 1 bis 9 durchzuführen.
